# EUROPÄISCHE PATENTSCHRIFT

(11) **EP 0 627 568 B1**
(45) Veröffentlichungstag und Bekanntmachung des Hinweises auf die Patenterteilung: **07.05.1997**
(21) Anmeldenummer: 94108182.0
(22) Anmeldetag: 27.05.1994
(51) Int. Cl.: F16B 19/02, F16B 35/04

(54) **Presspassverbindungselement, insbesondere Radbolzen**
Fixing and centering press fit element, mainly wheel bolt
Elément de connection et de centrage par insertion à force, en particulier boulon de roue

(30) Priorität: 04.06.1993 DE 4318494
(43) Veröffentlichungstag der Anmeldung: 07.12.1994
(73) Patentinhaber: Kamax-Werke Rudolf Kellermann GmbH & Co. KG, D-37520 Osterode (DE)
(72) Erfinder: Damm, Klaus Dr.-Ing., D-35315 Homberg/Ohm (DE); Mages, Walter Dr.-Ing., D-36304 Alsfeld (DE); Mohr, Andreas Dipl.-Ing., D-36326 Antrifttal 3 (DE)
(74) Vertreter: Rehberg, Elmar, Dipl.-Ing.

(56) Entgegenhaltungen:
- EP-A- 0 144 503
- DE-A- 2 143 784
- DE-A- 3 521 755
- FR-A- 1 111 029
- GB-A- 399 980
- GB-A- 1 235 143

## Beschreibung

Die Erfindung bezieht sich auf ein unter Anwendung einer Axialkraft in eine Bohrung einpreßbares Preßpaßverbindungselement, insbesondere Radbolzen, mit einem Schaft und einem einen demgegenüber größeren Durchmesser aufweisenden Anschlag in Form eines Kopfes, eines Mittelbundes o. dgl., wobei der Schaft auf der dem Anschlag zugekehrten Seite einen durch Kaltumformung hergestellten Preßpaßabschnitt aus einem mehrgängigen wendelprofil, der gegenüber der zugehörigen Bohrung Übermaß hat, und auf der dem Anschlag abgekehrten Seite vorzugsweise einen Abschnitt mit Befestigungsgewinde aufweist. Das Preßpaßverbindungselement wird durch eine reine Axialkraft in eine Bohrung des Teils eingepreßt, in welchem es Anwendung finden soll. Das Preßpaßverbindungselement wird nicht etwa eingeschraubt. Die Erfindung bezieht sich auch nicht auf sogenannte Paßdehnschrauben, die einen Dehnabschnitt aufweisen, der Untermaß gegenüber der zugehörigen Bohrung im Werkstück aufweist. Auf eine Dehnfunktion kommt es im Zusammenhang mit der vorliegenden Erfindung nicht zwingend an, jedoch auf eine Paßfunktion unter Zentrierung und Klemmung.

Ein Preßpaßverbindungselement der eingangs beschriebenen Art ist aus der GB-PS 399 980 bekannt. Der Preßpaßabschnitt wird von einem mehrgängigen Wendelprofil gebildet, welches durch Kaltumformung hergestellt ist und Übermaß gegenüber der zugehörigen Bohrung aufweist. Das Material des Preßpaßverbindungeelementes wird weicher gewählt als das Material des Teils mit der zugehörigen Bohrung, sodaß der Einpreßvorgang unter plastischer Verformung abläuft.

Preßpaßverbindungselemente sind weiterhin z.B. als Sechskant-Paßschrauben nach DIN 609 bekannt. In einer bevorzugten Anwendung werden sie in entsprechender Anpassung als Radbolzen eingesetzt. Sie besitzen dann einen Kopf, der häufig einseitig abgeschrägt ausgebildet ist und der einen Anschlag beim Einpressen bildet. Der Anschlag beendet den Einpreßvorgang. An den Kopf schließt sich in Einpreßrichtung ein Schaft mit vergleichsweise kleinerem Außendurchmesser an, der auf der dem Kopf zugekehrten Seite einen Preßpaßabschnitt aufweist. Der Preßpaßabschnitt ist als geschliffene zylindrische Fläche ausgebildet. Der Preßpaßabschnitt stellt die größte Verdickung innerhalb des Schaftes dar, d. h. er besitzt den größten Außendurchmesser im Bereich des Schaftes. Zwischen dem Kopf und dem Preßpaßabschnitt ist ein Freistich vorgesehen. Es ist auch möglich, an dieser Stelle einen Übergangsradius vorzusehen; dies erfordert jedoch eine Anfasung der Bohrung des Teils, in welches das Preßpaßverbindungselement eingepreßt werden soll. Der Preßpaßabschnitt hat Übermaß gegenüber der zugehörigen Bohrung. Insbesondere bei Radbolzen schließt sich am Schaft in den Preßpaßabschnitt ein Abschnitt mit Befestigungsgewinde an, wobei der Außendurchmesser des Befestigungsgewindes kleiner als der Durchmesser des Preßpaßabschnittes ist. Die zur Herstellung eines solchen Radbolzens eingesetzten Preßrohlinge weisen im Bereich des Schaftes einen gestuften Außendurchmesser auf. Im Bereich des zu schleifenden Preßpaßabschnittes ist der größte Durchmesser vorgesehen, während im Bereich des zu bildenden Befestigungsgewindes ein kleinerer Durchmesser Anwendung findet. Zwischen beiden Abschnitten ist ein kegelförmiger Übergangsabschnitt vorgesehen.

Diese bekannten Preßpaßverbindungselemente weisen eine Reihe von Nachteilen auf. Um die erforderlichen Toleranzen im Bereich des Übermaßes einhalten zu können, muß der Preßpaßabschnitt durch einen Schleifvorgang fertiggestellt werden. Dieser Schleifvorgang ist einerseits aufwendig und erfordert andererseits den Einsatz zusätzlichen Materials, welches weggeschliffen wird. Im Übergangsbereich zwischen dem Preßpaßabschnitt und dem Kopf ist ein Freistich erforderlich, sofern die zugehörige Bohrung keine Anfasung aufweist. Dieser Freistich wird üblicherweise durch einen Drehvorgang hergestellt, der insbesondere in Verbindung mit dem Schleifvorgang die Herstellung verteuert. Solche Preßpaßverbindungselemente weisen nicht nur ein vergleichsweise hohes Gewicht auf, sondern erfordern auch ein höheres Einsatzgewicht, als es dem Gewicht des fertigen Teils entspricht. Bei der Herstellung müssen abgestufte Preßrohlinge eingesetzt werden, die einen zusätzlichen Bearbeitungsschritt im Vergleich zu Rohlingen mit durchgehendem Schaftdurchmesser erfordern. Beim axialen Einpressen des Preßpaßverbindungselementes in die zugehörige Bohrung des entsprechenden Werkstückes, insbesondere der Radnabe, ist die Anwendung einer Fügehilfe erforderlich, die dafür sorgt, daß das Preßpaßverbindungselement axial ausgerichtet geführt wird, so daß die Achse der Bohrung und die Achse des Radbolzens zentrisch zueinander verlaufen. Dennoch besteht beim Einpressen die Gefahr einer Materialverdrängung, da der Preßpaßabschnitt gegenüber der Bohrung Übermaß hat. Das Preßpaßverbindungselement besitzt keine Zentrierhilfe, weil der kegelförmige Zwischenabschnitt des Preßrohlings mit dem gestuften Schaft von dem in der Regel aufgerollten oder aufgewalzten Befestigungsgewinde überdeckt wird. Beim axialen Einpressen beobachtet man zuweilen ein Festfressen während der Einpreßbewegung. Solche Freßerscheinungen, die letztlich mit der Axialkraft zwar überwunden werden können, führen jedoch dazu, daß nicht nur das Preßpaßverbindungselement, sondern auch das zugehörige Teil mit der Bohrung so dauerhaft geschädigt sind, daß eine Wiederverwendbarkeit beider Partner nicht gegeben ist.

Es sind weiterhin Preßpaßverbindungselemente bekannt, deren Preßpaßabschnitt nicht aus einer zylindrischen geschliffenen Mantelfläche besteht, sondern bei denen der Preßpaßabschnitt mit einer Rändelung, also mit vorstehenden Rippen oder Leisten versehen ist, die axial ausgerichtet auf der Oberfläche des Preßpaßabschnittes angeordnet sind. Die axiale Ausrichtung der Rändelung, also parallel zur Achse des Preßpaßverbindungselementes, ist zwingend erforderlich, um jegliche Drehbewegung des Preßpaßverbindungselementes beim axialen Einpressen in die Bohrung zu vermeiden. Neben der aufwendigen Herstellung solcher Preßpaßverbindungselemente besteht ein Hauptnachteil darin, daß keine Wiederverwendbarkeit gegeben ist. Die Rändelung furcht sich beim axialen Einpressen in die Bohrung ein und verformt sich dabei selbst plastisch. Damit weist die Rändelung an ihrem Außendurchmesser nicht mehr die erforderliche Toleranz auf; das Preßpaßverbindungselement ist damit nicht wiederverwendbar. Aber auch die Bohrung des zugehörigen Teils wird durch die Furchen plastisch verändert, so daß auch das Partnerteil des Preßpaßverbindungselementes nicht wiederverwendbar ist. Im Gegensatz dazu sind gattungsgemäße Preßpaßverbindungselemente mit Preßpaßabschnitten aus einer zylindrischen Mantelfläche wiederverwendbar. Dort ist auch das die Bohrung tragende Teil wiederverwendbar, sofern beim Einpressen keine Freßerscheinungen auftreten.

Darüberhinaus sind sogenannte Paß-Dehnschrauben bekannt. Mit diesen beschäftigt sich die vorliegende Erfindung nicht. Paß-Dehnschrauben, wie sie durch die DE-PS 35 21 755, die DE-OS 21 43 784 und auch die EP 0 144 503 B1 bekannt sind, weisen alle im Bereich des Dehnpaßabschnittes Untermaß gegenüber der zugehörigen Bohrung auf. Darüberhinaus dienen solche Verbindungselemente immer der Verbindung zweier Teile. Sie haben die Aufgabe, die beiden Bohrungen der beiden Teile zueinander zu zentrieren. Der Dehnpaßabschnitt ist in der Bohrung bei entsprechender Axialbelastung frei beweglich. Eine Verdrehung der Dehnpaßschraube darf nicht behindert werden. Dehnpaßverbindungselemente werden entweder eingeschraubt oder eingesteckt und dann durch eine aufzuschraubende Mutter gesichert. Die bekannten Dehnpaßverbindungselemente weisen im Bereich des Dehnabschnittes entweder eine schlanke Schaftausbildung oder ein Wendelprofil oder umlaufende Wulste oder Rippen auf. Damit wird die erforderliche Dehnfunktion im Bereich des Dehnpaßabschnittes erreicht. Auch die Zentrierfunktion für die zwei miteinander zu verbindenden Bauteile wird mit Hilfe des Dehnpaßabschnittes erreicht, wobei freilich beim Fügen immer Spiel vorhanden ist. Dehnpaßverbindungselemente unterscheiden sich damit grundsätzlich von den gattungsgemäßen Preßpaßverbindungselementen.

Der Erfindung liegt die Aufgabe zugrunde, ein Preßpaßverbindungselement der eingangs beschriebenen Art aufzuzeigen, welches preiswerter als bisher herstellbar ist und Vorteile bei der Handhabung bietet. Eine Wiederverwendbarkeit sollte in der Regel gegeben sein.

Erfindungsgemäß wird dies bei dem Preßpaßverbindungselement der eingangs beschriebenen Art dadurch erreicht, daß der Preßpaßabschnitt mit dem mehrgängigen, vorzugsweise mindestens dreigängigen, Wendelprofil - bezogen auf den Durchmesser der Bohrung - ein eine Materialverdrängung im plastischen Bereich vermeidendes Übermaß aufweist, und daß das Wendelprofil - bezogen auf die zylindrische Mantelfläche der Bohrung - einen Flächentraganteil von mindestens 30 % aufweist.

Die Erfindung geht damit von dem Gedanken aus, den Preßpaßabschnitt mit einem solchen Wendelprofil zu versehen, also mit einer gewindeähnlichen Gestaltung, jedenfalls was die Steigung anbetrifft, daß keine plastische Verformung stattfindet. Es dürfen keine umlaufenden Wulste oder Rippen und auch keine axiale Rändelung angewendet werden, weil beide Maßnahmen die Wiederverwendbarkeit beeinträchtigen. Am besten ist es, wenn ein dreigängiges Wendelprofil Anwendung findet. Die drei Einläufe des Wendelprofils sind dann gleichabständig über den Umfang verteilt angeordnet und beim Einführen des Preßpaßverbindungselementes in die Bohrung des zugehörigen Teils wird durch diese drei Einläufe eine Dreipunktanlage geschaffen, durch die das Preßpaßverbindungselement mit seiner Achse senkrecht zu der durch die drei Einläufe festgelegten Ebene ausgerichtet und zentriert wird. Beim anschließenden axialen Einpressen verläuft der Einpreßvorgang gezielt und kontrolliert, ohne daß eine Materialverdrängung im plastischen Bereich stattfindet. Bei Verwendung von mindestens dreigängigen Wendelprofilen kann eine Fügehilfe beim Einpressen völlig entfallen. Sofern jedoch ein zweigängiges Wendelprofil Anwendung findet, ist die Anwendung einer Fügehilfe sinnvoll.

Das mehrgängige Wendelprofil im Bereich des Preßpaßabschnittes arbeitet nach einem anderen Wirkprinzip als die geschliffene zylindrische Mantelfläche im Stand der Technik: Die Bohrung wird nicht mehr insgesamt radial aufgefedert, sondern das Einpressen des Wendelprofils bewirkt ein partielles bzw. linienförmiges Auffedern im elastischen Bereich. Die Bohrung wird radial linienförmig entsprechend dem Wendelprofil elastisch deformiert. Dabei tritt nach Beendigung des Einpreßvorganges eine Rückfederung des Materials der Bohrung im Zwischenraum zwischen den Wendeln des Wendelprofils ein. Damit entsteht ein gewisser Formschluß zwischen Preßpaßabschnitt und Bohrung in axialer Richtung, der zusätzlich zum Reibschluß des Flächentraganteils wirksam ist.

Das Wendelprofil muß einen Flächentraganteil von mindestens 30 % aufweisen. Dabei handelt es sich um die Fläche am Außendurchmesser des Wendelprofils, die nach Beendigung des Einpreßvorgangs Kontakt zu der Innenwandung der Bohrung aufweist. Die prozentuale Angabe des Flächentraganteils kann auf die zylindrische Mantelfläche der Bohrung bezogen werden, wobei vorausgesetzt wird, daß die Bohrung und der Preßpaßabschnitt in ihrer axialen Länge übereinstimmen. Stattdessen wäre es auch möglich, den Flächentraganteil des Preßpaßabschnittes auf eine fiktive Mantelfläche des Preßpaßabschnittes selbst zu beziehen. Ein Flächentraganteil von 30 % in Verbindung mit der Anwendung eines mehrgängigen Wendelprofils reicht überraschenderweise aus, um ähnliche Festhaltekräfte zu realisieren, wie sie bei Verwendung geschliffener zylindrischer Preßpaßabschnitte auftreten. Dies liegt vermutlich an dem zusätzlich erzielten Formschluß im elastischen Bereich.

Weitere Vorteile des neuen Preßpaßverbindungselementes sind insbesondere in der preiswerteren Herstellung zu sehen. Durch die Kaltumformung des Wendelprofils entsteht gleichsam automatisch und ohne zusätzlichen Arbeitsgang auf der dem Anschlag zugekehrten Seite des Preßpaßabschnittes eine umlaufende Vertiefung, die die Funktion eines Freistiches im Stand der Technik übernimmt, so daß andererseits die Bohrung des zugehörigen Werkstückes keine Anfasung benötigt. Auf der anderen Seite des Preßpaßabschnittes, also in Richtung auf das freie Ende des Schaftes, entsteht bei dem Kaltumformen durch den Auslauf des Wendelprofils eine Zentrierhilfe. Dies ist selbst dann der Fall, wenn ein Preßrohling mit nicht-gestuftem Schaftdurchmesser Anwendung findet. Durch die besondere Formgestaltung des Wendelprofils bei der Kaltumformung ist es ohne weiteres möglich, das Wendelprofil so auszubilden, daß sein Außendurchmesser jedenfalls einen größeren Durchmesser bekommt als der Außendurchmesser eines Abschnittes mit Befestigungsgewinde. Schließlich ist es weiterhin vorteilhaft, daß infolge des vergleichsweise reduzierten Flächentraganteils auch eine geringere Freßneigung beim Einpressen des Preßpaßverbindungselementes auftritt.

Vorzugsweise ist der Außendurchmesser des Wendelprofils gegenüber dem Außendurchmesser des zylindrischen Preßpaßabschnitts vergrößert. Im Stand der Technik wird der zylindrische Preßpaßabschnitt, der durch einen Schleifvorgang fertiggestellt ist, benutzt. Die geschliffene äußere Mantelfläche des Preßpaßabschnittes macht somit 100 % aus. Sie besitzt ein entsprechendes Übermaß gegenüber der Bohrung des zugehörigen Teils und kommt somit mit 100 % ihrer Außenfläche in eingepreßtem Zustand mit der inneren Oberfläche der Bohrung in Kontakt. Das neue Preßpaßverbindungselement, bei welchem der Außendurchmesser des Preßpaßabschnittes von dem Wendelprofil gebildet wird, weist einen Flächentraganteil auf, der kleiner als 100 % ist, also etwa im Bereich zwischen 20 und allenfalls 50 % liegen kann. Insbesondere liegt der Flächentraganteil zwischen 30 und 40 %. Dabei wird ein größeres Übermaß bei dem neuen Preßpaßverbindungselement angewendet, welches allerdings so gestaltet ist, daß die dadurch herforgerufene Deformierung immer noch im elastischen Bereich liegt, so daß Schädigungen der beiden Teile mit bleibenden Verformungen beim Einpressen nicht auftreten.

Das Wendelprofil kann bevorzugt einen Flankenwinkel im Bereich zwischen 0° und 30° - vorzugsweise etwa 15° - aufweisen. Es handelt sich also um eine sehr steile Flankengestaltung mit dem Ziel, das durch Kaltumformung verdrängte Material im Bereich des Preßpaßabschnittes auf einen größeren Durchmesser zu verlagern und dort den beschriebenen Flächentraganteil zu bilden. Die Tiefe des Wendelprofils, also die Differenz zwischen Außendurchmesser und Kerndurchmesser, muß nicht unbedingt besonders groß gewählt werden. Es ist durchaus möglich, die Vertiefungen zwischen den Wendeln des Wendelprofils entsprechend breit zu gestalten.

Von besonderer Bedeutung ist es, daß der Außendurchmesser des Wendelprofils durch Kalibrieren, insbesondere Walzen, Rollen oder Schäften, festgelegt wird. Dies geschieht nach der Formgebung des Wendelprofils an sich, welches durch Kaltumformung geschaffen wird. Bei dieser Kaltumformung erhält der Außendurchmesser der Wendel noch keine glatte achsparallele Ausrichtung. Der Außendurchmesser wird in einem gesonderten Herstellungsvorgang kalibriert. Auch dabei handelt es sich um einen spanlosen Herstellungsschritt, der jedoch geeignet ist, ein vergleichsweise enges Toleranzfeld einzuhalten. Außerdem tritt durch dieses Kalibrieren eine Kaltverfestigung in dem nach außen gekehrten Bereich der Wendel ein, die zu einer Erhöhung der Dauerfestigkeit beiträgt und auch einem Verschleiß des Preßpaßverbindungselementes beim Einpressen entgegenwirkt.

Der bei der Herstellung des Preßpaßverbindungselementes eingesetzte Preßrohling kann vorteilhaft einen durchgehenden Schaftdurchmesser aufweisen, der der Ausgangsdurchmesser sowohl für das Wendelprofil als auch für das Gewindeprofil ist. Dieser durchgehende Schaftdurchmesser läßt ohne weiteres die Ausgestaltung des Preßpaßabschnittes sowie weiterer Abschnitte, beispielsweise mit Befestigungsgewinde, in der Weise zu, daß der Preßpaßabschnitt den größten Außendurchmesser mit entsprechendem Übermaß enthält, während z. B. der Abschnitt mit Befestigungsgewinde Untermaß gegenüber der Bohrung bekommt. Damit ist es möglich, daß Preßpaßverbindungselement in die Bohrung des zugehörigen Teils einzuführen und einzupressen, wobei der Abschnitt mit dem Befestigungsgewinde mit Spiel durch die Bohrung hindurchtritt, also sowohl das Befestigungsgewinde wie auch die Bohrung unverletzt bleiben.

Das Wendelprofil kann einen größeren Kerndurchmesser als der Kerndurchmesser des Abschnitts mit dem Befestigungsgewinde aufweisen. Damit ist sichergestellt, daß der kleinste Durchmesser jedenfalls nicht im Bereich des Preßpaßabschnittes vorliegt und ein eventueller Bruch bei Überlastung im Bereich des Befestigungsgewindes stattfindet.

Der Preßpaßabschnitt mit dem Wendelprofil bezogen auf den Nenndurchmesser der Bohrung ein Übermaß im Bereich von 0,3 bis 0,7 %, vorzugsweise von etwa 0,5 %, aufweisen. Im Stand der Technik mit geschliffenem Preßpaßabschnitt wird eine Überdeckung in der Größenordnung von etwa 0,1 - 0,2 % angewendet.

Die Erfindung wird an bevorzugten Ausführungsbeispielen weiter erläutert und beschrieben. Es zeigen:
- Figur 1: eine erste Ausführungsform des Preßpaßverbindungselementes als Radbolzen mit dreigängigem Wendelprofil,
- Figur 2: eine vergrößerte Darstellung des Preßpaßverbindungselementes gemäß Figur 1,
- Figur 3: einen Ausschnitt der Einzelheit Z des Wendelprofils gemäß Figur 1,
- Figur 4: das Preßpaßverbindungselement in einer zweiten Ausführungsform mit viergängigem Wendelprofil,
- Figur 5: eine weitere Ausführungsform des Preßpaßverbindungselementes mit viergängigem Wendelprofil und
- Figur 6: eine weitere Ausführungsform des Preßpaßverbindungselementes mit einem zweigängigen Wendelprofil und Fügehilfe.

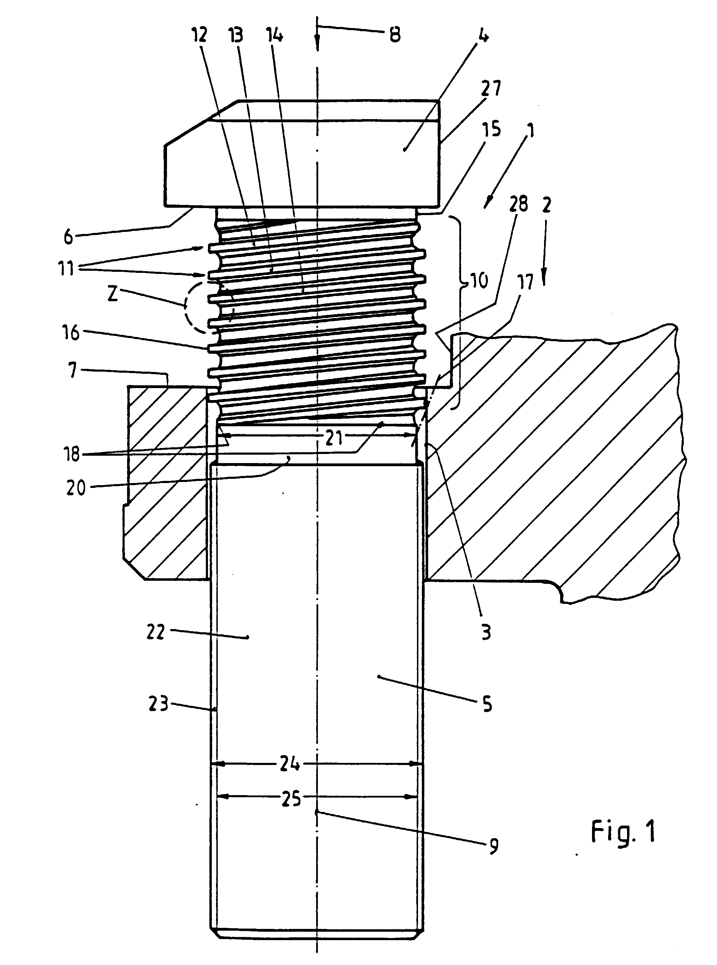

In Figur 1 sind die beiden zueiander gehörenden Teil verdeutlicht, nämlich das Preßpaßverbindungselement 1 und das zugehörige Teil 2, in dessen Bohrung 3 das Preßpaßverbindungselement 1 durch Anwendung einer Axialkraft einpreßbar ist.

Das Preßpaßverbindungselement 1 weist einen Anschlag 4 und einen Schaft 5 auf. Der Anschlag 4 ist kopfförmig ausgebildet und trägt den größten Durchmesser des Preßpaßverbindungselements 1. Der kopfförmige Anschlag 4 besitzt dem Schaft 5 zugekehrt eine Anschlagfläche 6, die auf einer Gegenfläche 7 am Teil 2 zur Anlage kommt, wenn der Einpreßvorgang durch axiale Kraftanwendung gemäß Pfeil 8 beendet ist. Der Anschlag 4 wie auch der Schaft 5 sind gegenüber der Achse 9 des Preßpaßverbindungselementes 1 entsprechend ausgerichtet angeordnet.

Der Schaft 5 des Preßpaßverbindungselementes 1 weist auf seiner dem Anschlag 4 zugekehrten Seite einen Preßpaßabschnitt 10 auf, der mit einem mehrgängigen Wendelprofil 11 versehen ist. Figur 1 zeigt ein dreigängiges Wendelprofil 11, wobei die einzelnen Wendel 12, 13, 14 mit gleicher Steigung und gleichabständig auf dem Umfang des Preßpaßabschnittes 10 verwirklicht sind. Die Herstellung des Wendelprofils 11 des Preßpaßabschnittes 10 geschieht durch eine Kaltumformung, so daß im Bereich des Schaftes 5 aus dem entsprechenden Durchmesser des eingesetzten Preßrohlings durch die Kaltumformung gleichsam automatisch ein Freistich 15 auf der dem Anschlag 4 zugekehrten Seite des Preßpaßabschnitts 10 entsteht. Der Außendurchmesser des Freistichs 15 ist somit kleiner als der maximale Außendurchmesser 16 der Wendel 12, 13, 14 des Preßpaßabschnittes 10. Dies erbringt den Vorteil, daß die Bohrung 3 des Teils 2, wie in Figur 1 dargestellt, keine Fase aufzuweisen braucht und trotzdem der Einpreßvorgang ordnungsgemäß erst dann beendet wird, wenn die Anschlagfläche 6 auf der Gegenfläche 7 des Teils 2 auftrifft.

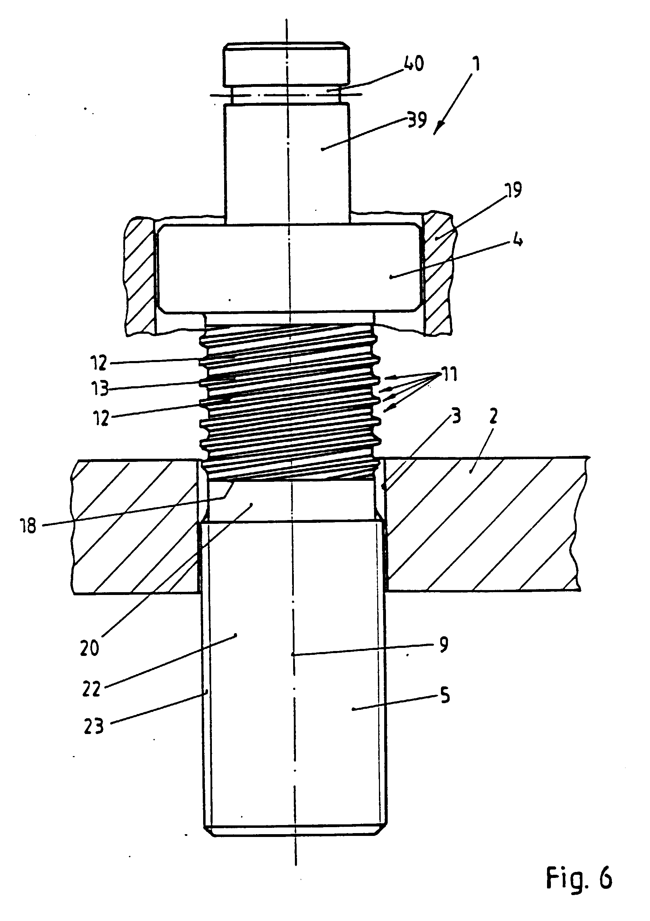

Auf der dem Anschlag 4 abgekehrten Seite ergibt sich gleichsam ebenso automatisch durch die Herstellung des Wendelprofils 11 durch Kaltumformung ein kegelförmiger Bereich 17, der durch eine strichpunktierte Linie angedeutet ist. Dieser kegelförmigen Bereich 17 wird durch die drei Ausläufe der Wendel 12, 13 und 14 auf dieser Seite realisiert. Der kegelförmige Bereich 17 stellt eine Zentrierhilfe beim Einfügen des Preßpaßverbindungselementes 1 in das Teil 2 zu Beginn des Einbringvorganges dar. Darüberhinaus ergeben sich in Verbindung mit der Dimensionierung der Bohrung 3 durch die drei Ausläufe der Wendel 12, 13 und 14 drei gleichabständig über den Umfang verteilt angeordnete Punkte 18, die eine Ebene festlegen, die exakt senkrecht zu der Achse 9 des Preßpaßverbindungselementes 1 verläuft. Dies führt dazu, daß das Preßpaßverbindungselement 1 während des Einbringens in das Teil 2 mit seiner Achse 9 senkrecht zur Fügerichtung gemäß Pfeil 8 ausgerichtet wird. Es erfolgt also nicht nur eine Zentrierung, sondern zusätzlich eine Ausrichtung. Diese Ausrichtung erbringt den Vorteil, daß eine gesonderte Fügehilfe 19, wie sie schematisch in Figur 6 angedeutet ist, in Fortfall kommen kann. Das Preßpaßverbindungselement 1 ist gleichsam selbst mit einer Fügehilfe durch die drei Punkte 18 versehen bzw. ausgestattet.

Der Schaft 5 weist im Anschluß an den kegelförmigen Bereich 17 einen Übergangsbereich 20 auf, der einen kleineren Außendurchmesser 21 besitzt als der Außendurchmesser 16 der Wendel 12, 13 und 14. Der Außendurchmesser 21 stellt den Außendurchmesser des Schaftes 5 des eingesetzten Preßrohlings dar.

An den Übergangsbereich 20 schließt sich in Richtung auf das freie Ende des Schaftes 5 ein Abschnitt 22 an, der mit einem Befestigungsgewinde 23 ausgestattet sein kann, aber auch zapfenartige oder eine sonstige Form besitzen kann. Der maximale Außendurchmesser 24 des Abschnittes 22 ist auf jeden Fall kleiner als der maximale Außendurchmesser 16 des Wendelprofils 11. Der Außendurchmesser 24 ist auch kleiner als der Innendurchmesser der Bohrung 3. Der maximale Außendurchmesser 16 des Wendelprofils 11 ist jedoch größer als der Innendurchmesser der Bohrung 3; der Preßpaßabschnitt 10 hat also Übermaß. Der Kerndurchmesser 25 des Befestigungsgewindes 23 kann kleiner als der Kerndurchmesser 26 des Wendelprofils 11 ausgebildet sein.

Der Anschlag 4 kann eine Sicherungsfläche 27 aufweisen, die mit einer Sicherungsfläche 28 am Teil 2 korresponiert, so daß hier eine Sicherung gegen Verdrehen des Preßpaßverbindungselementes 1 in eingepreßtem Zustand gegeben ist.

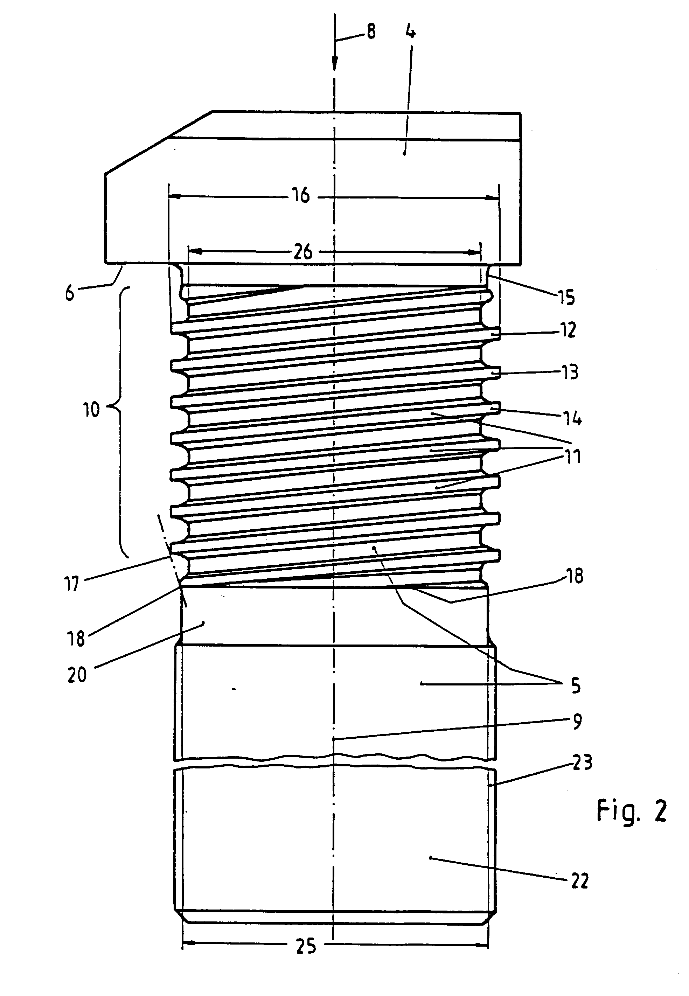

Figur 2 verdeutlicht noch einmal die Verhältnisse an dem Preßpaßverbindungselement 1, wobei das zugehörige Teil 2 nicht dargestellt ist.

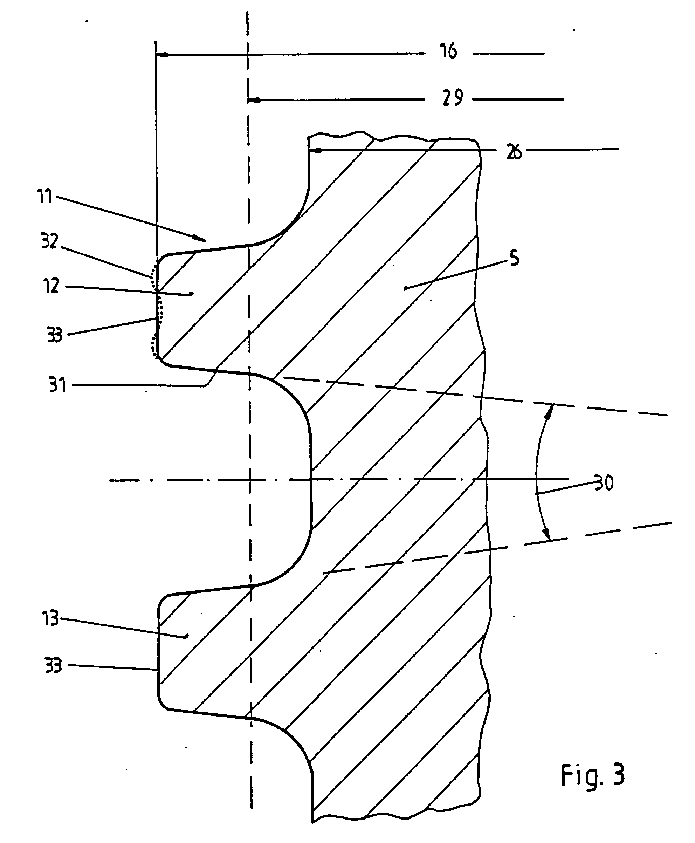

Figur 3 zeigt eine Einzelheit Z aus Figur 1, nämlich eine beispielhafte Formgebung des Wendelprofils 11 im Bereich des Preßpaßabschnittes 10. Das Wendelprofil 11 besitzt die aus der Zeichnung entnehmbare Formgebung. Der mittlere Flankendurchmesser 29 stellt zugleich den Außendurchmesser des Preßrohlings dar, wie er bei der Herstellung des Preßpaßverbindungselementes eingesetzt wird. Das Wendelprofil 11 wird durch Kaltumformung erzeugt, wobei eine Materialverdrängung, wie ersichtlich, von innen nach außen stattfindet. Es wird hier ein Flankenwinkel 30 von 15° verwirklicht, d. h. die Flanken 31 verlaufen vergleichsweise steil. Nach der Herstellung des Wendelprofils 11 durch Kaltumformung besitzt der Preßpaßabschnitt im Bereich des Außendurchmessers 16 eine Formgebung, wie sie in Figur 3 für die Wendel 12 in einer gepunkteten Linie 32 angedeutet ist. Diese Formgebung stellt einen Zwischenherstellungsschritt dar. Durch eine Kaltumformung, insbesondere durch Walzen, Rollen oder Schäften, wird die äußere Oberfläche des Wendelprofils geglättet, wie dies für die Wendel 13 in Figur 3 in durchgezogener Linienführung dargestellt ist. Die Summe der so gebildeten zylindrischen Flächenanteile mit dem Außendurchmesser 16 der Wendel 12, 13, 14, bezogen auf eine fiktive Mantelfläche des Preßpaßabschnittes 10 entsprechend dem mittleren Flankendurchmesser 29 ergibt den Flächentraganteil 33, also den Teil der Fläche des Preßpaßabschnittes 10 mit dem Außendurchmesser 16, der in eingepreßtem Zustand in das Teil 2 mit dem Innendurchmesser der Bohrung 3 in Kontakt kommt. Dieser Flächentraganteil 33 beträgt mindestens 30 %.

Als Preßpaßverbindungselement 1, zugehörig zur Bohrung 3 des Teils 2, hat der Preßpaßabschnitt 10 immer Übermaß, wobei das neue Preßpaßverbindungselement im Vergleich zum Stand der Technik eine größere Überdeckung aufweist. Die Überdeckung kann etwa das dreifache der Überdeckung beim Stand der Technik ergeben. Dies zeigt folgende Vergleichsrechnung:

### Stand der Technik mit geschliffenem Preßpaßabschnitt

| | |
|---|---|
| Außendurchmesser des Preßpaßabschnittes 22 U6 | Max. Außendurchmesser = 22,054 mm |
| | |
| | Min. Außendurchmesser = 22,041 mm |
| | |
| Innendurchmesser der Bohrung 22 H7 | Max. Innendurchmesser = 22.021 mm |
| | |
| | Min. Innendurchmesser = 22,000 mm |

Hieraus ergibt sich eine
maximale Überdeckung = 22,054 - 22,000 = 0,054 mm
minimale Überdeckung = 22,041 - 22,021 = 0,020 mm.

Damit liegt das Übermaß des Preßabschnitts, die relative Überdeckung, in der Größenordnung von 0,16 % bezogen auf den Nenndurchmesser der Bohrung.

### Anmeldungsgegenstand mit Wendelprofil im Preßpaßabschnitt

| | |
|---|---|
| Außendurchmesser des Wendelprofils 22,11 mm | Max. Außendurchmesser = 22,130 mm |
| | |
| | Min. Außendurchmesser = 22,110 mm |
| | |
| Innendurchmesser der Bohrung 22 H7 | Max. Innendurchmesser = 22,021 mm |
| | |
| | Min. Innendurchmesser = 22,000 mm |

Maximale Überdeckung = 22,130 - 22,000 = 0,130 mm
Minimale Überdeckung = 22,110 - 22,021 = 0,089 mm

Das Übermaß des Wendelprofils bzw. die relative Überdeckung liegt damit in der Größenordnung von 0,5 % bezogen auf den Nenndurchmesser der Bohrung, beträgt also etwa das Dreifache der Überdeckung im Stand der Technik.

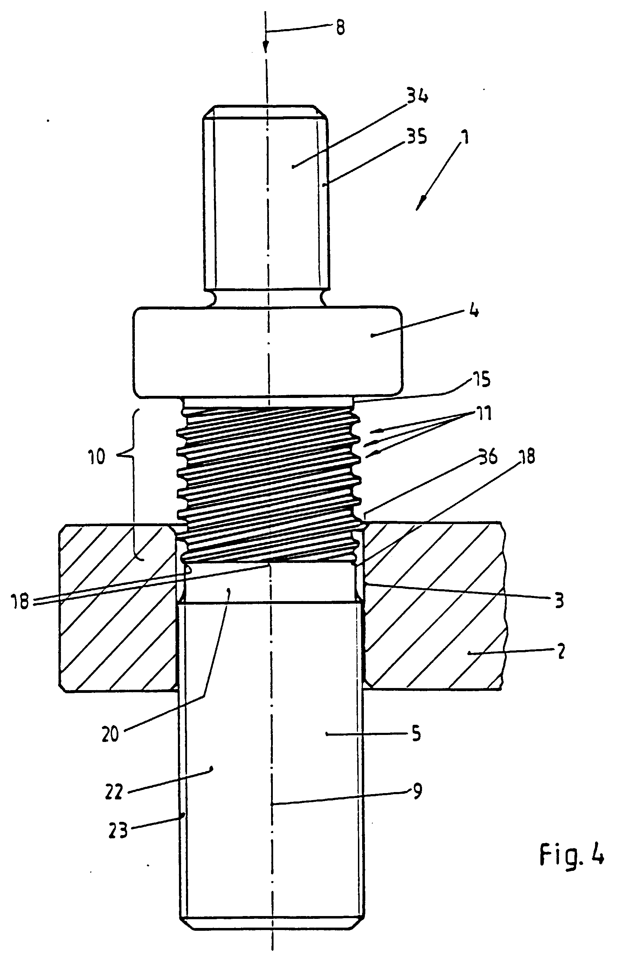

Figur 4 zeigt ein weiteres Ausführungsbeispiel des Preßpaßverbindungselementes 1, bei dem der Anschlag 4 von einem Mittelbund realisiert wird. An den Anschlag 4 schließt sich auf der dem Schaft 5 abgekehrten Seite ein Zapfen 34 an, der mit Gewinde 35 versehen ist. Auch hier wird das Preßpaßverbindungselement 1 gemäß Pfeil 8 in die Bohrung 3 des Teils 2 eingepreßt. Die Bohrung 3 ist mit einer Fase 36 versehen, die nicht stört. Wie bereits ausgeführt, kann die Fase 36 auch entfallen. Der Preßpaßabschnitt 10 besitzt hier ein viergängiges Wendelprofil 11, so daß beim Einfügen die Ebene senkrecht zu der Achse 9 von vier Punkten 18 gebildet ist.

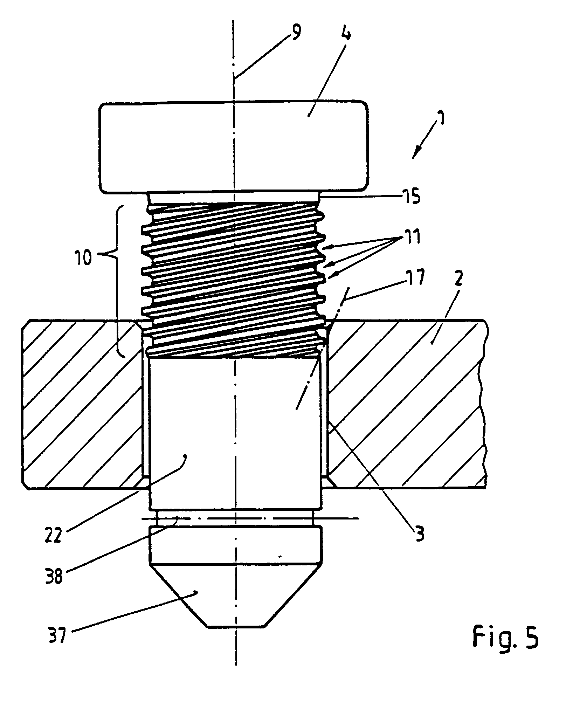

Auch das Ausführungsbeispiel des Preßpaßverbindungselements 1 gemäß Figur 5 weist ein viergängiges Wendelprofil 11 auf. Der Abschnitt 22 ist weitgehend zylindrisch ausgebildet. Er besitzt eine kegelstumpfförmige Spitze 37 und eine Nut 38, die zum Anbringen eines Sicherungsrings dienen kann. Dies stellt ein Beispiel für das Preßpaßverbindungselement 1 dar, bei dem kein Befestigungsgewinde 23 im Bereich des Abschnittes 22 verwirklicht ist. Auch der Übergangsbereich 20 fehlt hier. Dennoch wird auch hier durch den Auslauf der Wendel der kegelförmige Bereich 17 geschaffen, dem die Zentrier- und Ausrichtfunktion zukommt.

Figur 6 zeigt ein Ausführungsbeispiel des Preßpaßverbindungselementes 1 mit einem zweigängigen Wendelprofil 11, so daß am Einlauf nur zwei diagonal gegenüberliegende Punkte 18 geschaffen sind, die gegenüber der Achse 9 keine Ebene festlegen. Aus diesem Grunde ist eine Fügehilfe 19 erforderlich, um während des Einbringens eine Ausrichtung der Achse 9 des Preßpaßverbindungselements 1 zu der Achse der Bohrung 3 des Teils 2 zu bekommen. An den als Mittelbund ausgebildeten Anschlag 4 kann sich auf der dem Schaft 5 abgekehrten Seite ein Zapfen 39 mit einer Nut 40 anschließen. Die Ausbildung auf dieser Seite des Anschlages 4 ist an sich für die vorliegende Erfindung ohne Bedeutung, ebenso die Ausbildung des Abschnittes 22 im einzelnen, also mit Befestigungsgewinde 23 oder ohne ein solches.

### BEZUGSZEICHENLISTE

- 1 -: Preßpaßverbindungselement
- 2 -: Teil
- 3 -: Bohrung
- 4 -: Anschlag
- 5 -: Schaft
- 6 -: Anschlagfläche
- 7 -: Gegenfläche
- 8 -: Pfeil
- 9 -: Achse
- 10 -: Preßpaßabschnitt
- 11 -: Wendelprofil
- 12 -: Wendel
- 13 -: Wendel
- 14 -: Wendel
- 15 -: Freistich
- 16 -: Außendurchmesser
- 17 -: kegelförmiger Bereich
- 18 -: Punkt
- 19 -: Fügehilfe
- 20 -: Übergangsbereich
- 21 -: Außendurchmesser
- 22 -: Abschnitt
- 23 -: Befestigungsgewinde
- 24 -: Außendurchmesser
- 25 -: Kerndurchmesser
- 26 -: Kerndurchmesser
- 27 -: Sicherungsfläche
- 28 -: Sicherungsfläche
- 29 -: Flankendurchmesser
- 30 -: Flankenwinkel
- 31 -: Flanke
- 32 -: Linie
- 33 -: Flächentraganteil
- 34 -: Zapfen
- 35 -: Gewinde
- 36 -: Fase
- 37 -: Spitze
- 38 -: Nut
- 39 -: Zapfen
- 40 -: Nut

## Patentansprüche

1. Unter Anwendung einer Axialkraft in eine Bohrung (3) einpreßbares Preßpaßverbindungselement (1), insbesondere Radbolzen, mit einem Schaft (5) und einem einen demgegenüber größeren Durchmesser aufweisenden Anschlag (4) in Form eines Kopfes, eines Mittelbundes o. dgl., wobei der Schaft (5) auf der dem Anschlag (4) zugekehrten Seite einen durch Kaltumformung hergestellten Preßpaßabschnitt (10) aus einem mehrgängigen Wendelprofil (11), der gegenüber der zugehörigen Bohrung (3) Übermaß hat, und auf der dem Anschlag (4) abgekehrten Seite vorzugsweise einen Abschnitt (22) mit Befestigungsgewinde (23) aufweist, **dadurch gekennzeichnet**, daß der Preßpaßabschnitt (10) mit dem mehrgängigen, vorzugsweise mindestens dreigängigen, Wendelprofil (11) - bezogen auf den Nenndurchmesser der Bohrung (3) - ein eine Materialverdrängung im plastischen Bereich vermeidendes Übermaß aufweist, und daß das Wendelprofil (11) - bezogen auf die zylindrische Mantelfläche der Bohrung (3) - einen Flächentraganteil (33) von mindestens 30 % aufweist.

2. Preßpaßverbindungselement nach Anspruch 1, **dadurch gekennzeichnet**, daß der Außendurchmesser (16) des Wendelprofils (11) größer als der Außendurchmesser eines funktionsgleichen zylindrischen Preßpaßabschnitts ausgebildet ist.

3. Preßpaßverbindungselement nach Anspruch 1 oder 2, **dadurch gekennzeichnet**, daß das Wendelprofil (11) einen Flankenwinkel (30) im Bereich zwischen 0 und 30° - vorzugsweise etwa 15° - aufweist.

4. Preßpaßverbindungselement nach einem der Ansprüche 1 bis 3, **dadurch gekennzeichnet**, daß der Außendurchmesser (16) des Wendelprofils (11) durch Kalibrieren, insbesondere Walzen, Rollen oder Schäften, festgelegt ist.

5. Preßpaßverbindungselement nach einem der Ansprüche 1 bis 4, **dadurch gekennzeichnet**, daß der bei der Herstellung des Preßpaßverbindungselementes eingesetzte Preßrohling einen durchgehenden Schaftdurchmesser (21) aufweist, der der Ausgangsdurchmesser sowohl für das Wendelprofil als auch für das Gewindeprofil ist.

6. Preßpaßverbindungselement nach einem der Ansprüche 1 bis 5, **dadurch gekennzeichnet**, daß das Wendelprofil (11) einen größeren Kerndurchmesser (26) als der Kerndurchmesser (25) des Abschnitts (22) mit dem Befestigungsgewinde (23) aufweist.

7. Preßpaßverbindungselement nach Anspruch 2, **dadurch gekennzeichnet**, daß der Preßpaßabschnitt (10) mit dem Wendelprofil (11) bezogen auf den Nenndurchmesser der Bohrung (3) ein Übermaß im Bereich von von 0,3 bis 0,7 %, vorzugsweise von etwa 0,5 %, aufweist.

## Claims

1. Force fit connecting element (1), especially wheel stud, which may be force fitted in a drill hole (3) by exertion of an axial force, with a shank (5) and a stop (4) in the shape of a head, a collar or the like having a larger diameter than the shank (5), where the shank (5) has on the side facing the stop (4) a force fit section (10) made from a multiple-threaded helical profile (11) by cold forming, which has an overmeasure with respect to the corresponding drill hole (3), and on the side facing away from the stop (4) a section (22) with fastening thread (23), **characterized in that** the force fit section (10) with the multiple-threaded, preferably at least triple-threaded, helical profile (11) - with respect to the nominal diameter of the drill hole (3) - has an overmeasure avoiding the danger of plastic material displacement during the fitting, and that the helical profile (11) - with respect to the cylindrical surface area of the drill hole (3) - has a contact area fraction (33) of at least 30 %.

2. Force fit connecting element according to claim 1, **characterized in that** the outer diameter (16) of the helical profile (11) is formed to be larger than the outer diameter of a cylindrical force fit section having an equal function.

3. Force fit connecting element according to claim 1 or 2, **characterized in that** the helical profile (11) has a flank angle (30) in the range of 0° to 30°, preferably approximately 15°.

4. Force fit connecting element according to one of the claims 1 to 3, **characterized in that** the outer diameter (16) of the helical profile (11) is defined by gauging, especially by milling, rolling or exact partial extrusion.

5. Force fit connecting element according to one of the claims 1 to 4, **characterized in that** the slug used in the production of the force fit connecting element has a continuous shank diameter (21), which is the outer diameter for the helical profile as well as for the thread profile.

6. Force fit connecting element according to one of the claims 1 to 5, **characterized in that** the helical profile (11) has a larger core diameter (26) than the core diameter (25) of the section (22) with the fastening thread (23).

7. Force fit connecting element according to claim 2, **characterized in that** the force fit section (10) with the helical profile (11) has an overmeasure in the region of 0.3 to 0.7 %, preferably approximately 0.5 %, with respect to the nominal diameter of the drill hole (3).

## Revendications

1. Elément de liaison par ajustement serré (1), en particulier boulon de roue, à presser, par utilisation d'une force axiale, à l'intérieur d'un perçage (3), avec une tige (5) et une butée (4), présentant un plus grand diamètre que celle-ci, sous la forme d'une tête, d'un épaulement central ou similaire, dans lequel la tige (5) présente, sur le côté tourné vers la butée (4), une portion d'ajustement serré (10), réalisée par déformation à froid, d'un profilé hélicoïdal (11) multiple, qui a une surcote par rapport au perçage (3) correspondant, et présente, sur le côté opposé à la butée (4), de préférence une portion (22) avec un filetage de fixation (23), caractérisé en ce que la portion d'ajustement serré (10) avec le profilé hélicoïdal (11) multiple, de préférence au moins triple, présente - par rapport au diamètre nominal du perçage (3) - une surcote évitant un déplacement de matière dans le domaine plastique, et en ce que le profilé hélicoïdal (11) présente - par rapport à la surface d'enveloppe cylindrique du perçage (3) - une fraction portante de surface (33) d'au moins 30 %.

2. Elément de liaison par ajustement serré selon la revendication 1, caractérisé en ce que le diamètre extérieur (16) du profilé hélicoïdal (11) est supérieur au diamètre extérieur d'une portion d'ajustement serré cylindrique, de fonction identique.

3. Elément de liaison par ajustement serré selon la revendication 1 ou 2, caractérisé en ce que le profilé hélicoïdal (11) présente un angle de flanc (30) compris entre 0 et 30°, de préférence environ égal à 15°.

4. Elément de liaison par ajustement serré selon l'une des revendications 1 à 3, caractérisé en ce que le diamètre extérieur (16) du profilé hélicoïdal (11) est fixé par calibrage, en particulier cylindrage ou roulage.

5. Elément de liaison par ajustement serré selon l'une des revendications 1 à 4, caractérisé en ce que l'ébauche pressée, utilisée dans la fabrication de l'élément de liaison par ajustement serré, présente un diamètre de tige (21) continu, qui est le diamètre initial du profilé hélicoïdal comme du profilé fileté.

6. Elément de liaison par ajustement serré selon l'une des revendications 1 à 5, caractérisé en ce que le profilé hélicoïdal (11) présente un plus grand diamètre de noyau (26) que le diamètre de noyau (25) de la portion (22) avec le filetage de fixation (23).

7. Elément de liaison par ajustement serré selon la revendication 2, caractérisé en ce que la portion d'ajustement serré (10) avec le profilé hélicoïdal (11) présente, par rapport au diamètre nominal du perçage (3), une surcote comprise entre 0,3 et 0,7 %, de préférence égale à 0,5 % environ.
